# EUROPEAN PATENT SPECIFICATION

(11) **EP 3 520 999 B1**
(45) Date of publication and mention of the grant of the patent: **29.09.2021**
(21) Application number: 18154713.4
(22) Date of filing: 01.02.2018
(51) Int. Cl.: B29C 64/153, B29C 64/277, B29C 64/393, B22F 10/20, B22F 10/30, B22F 12/00, B33Y 10/00, B33Y 50/02

(54) **APPARATUS FOR ADDITIVELY MANUFACTURING THREE-DIMENSIONAL OBJECTS**
VORRICHTUNG ZUR GENERATIVEN FERTIGUNG DREIDIMENSIONALER OBJEKTE
APPAREIL DE FABRICATION ADDITIVE D'OBJETS TRIDIMENSIONNELS

(43) Date of publication of application: 07.08.2019
(73) Proprietor: CL Schutzrechtsverwaltungs GmbH, 96215 Lichtenfels (DE)
(72) Inventor: Dr. Eichenberg, Boris, 96215 Lichtenfels (DE); Schödel, Frank, 96317 Kronach (DE); Dr. Pontiller-Schymura, Peter, 95512 Neudrossenfeld (DE)
(74) Representative: Hafner & Kohl PartmbB

(56) References cited:
- EP-A2- 2 514 553
- DE-A1-102015 119 745

## Description

The invention relates to an apparatus for additively manufacturing of three-dimensional objects by means of successive layerwise selective irradiation and consolidation of layers of a build material which can be consolidated by means of an irradiation device comprising at least two irradiation elements arranged as an irradiation array, in particular arranged on at least one common irradiation element carrier, wherein each irradiation element is adapted to emit an energy beam guidable or guided along an, in particular at least partially curved, energy beam path in the build plane, wherein the irradiation array is moveable relative to the build plane.

In prior art, apparatuses are known that comprise irradiation devices with at least two irradiation elements that are arranged as an irradiation array. The arrangement as an irradiation array defines a spatial relation between the at least two irradiation elements assigned to the irradiation array. For example, the at least two irradiation elements may be assigned (and attached) to a common irradiation element carrier, wherein the irradiation elements are not movable relative to one another with respect to the common irradiation element carrier. Instead, the irradiation array may be moved as a whole with all irradiation elements comprised in the irradiation array.

Further, it is known from prior art that the irradiation device is arranged movable relative to the build plane, in which build material is directly irradiated via the at least one energy beam emitted by the irradiation elements. According to one approach, the irradiation device, in particular the irradiation array is moved, for example by a corresponding drive mechanism. It is also possible, that the module carrying the build plane can be moved relative to a static irradiation device. Of course, a combination of both approaches is also possible, wherein the irradiation device and the module carrying the build plane are moved relative to one another.

Due to the defined spatial relation regarding the arrangement of the individual irradiation elements of the irradiation array, build material irradiated by different irradiation elements may not receive the same energy input per length of the energy beam path the respective energy beam emitted by the individual irradiation elements is guided along.

DE 10 2015 119 745 A1 discloses an additive manufacturing apparatus comprising an imaging bar.

EP 2 514 553 A2 discloses an aparatus for manufacturing a component and a method of manufacturing a component, e.g. by material deposition.

It is an object to provide an apparatus for additively manufacturing of three-dimensional objects, wherein the energy input into the build material is improved. Document EP 3 345 698 A1 (prior art in accordance with Art. 54(3) EPC) discloses an apparatus for additively manufacturing of three-dimensional objects by means of successive layerwise selective irradiation and consolidation of layers of a build material which can be consolidated by means of an irradiation device comprising at least two irradiation elements arranged as an irradiation array, in particular on at least one common irradiation element carrier. Each irradiation element is adapted to emit an energy beam guidable or guided along an, in particular at least partially curved, energy beam path in the build plane. The irradiation array is moveable relative to the build plane. A control unit is provided that is adapted to control an energy input into at least one energy beam path and/or the spot size of at least one energy beam emitted by at least one irradiation element based on at least one parameter relating to an at least partially curved section of at least one energy beam path.

The object is inventively achieved by an apparatus according to claim 1 and by a method in accordance with claim 13.

Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an irradiation device comprising at least two irradiation elements arranged as an irradiation array, e.g. each emitting an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, as described before, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The irradiation elements of the irradiation array may be adapted to generate the energy beams or the energy beams may be generated by at least one separate beam generating unit, wherein the irradiation elements are adapted to solely emit the energy beam. In other words, each irradiation element is adapted to emit an energy beam that is generated in the irradiation element itself or generated in a separate beam generating unit, wherein the energy beam is guided to the irradiation element in that the energy beam can be emitted by the irradiation element and therefore, guided towards the build plane.

The irradiation array of the irradiation device and the build plane are movable relative to one another. Due to the movement of the irradiation array and therefore, the movement of the individual irradiation elements relative to the build plane, the respective energy beams can be guided along energy beam paths in the build plane. Build material arranged in the build plane is directly irradiated along the energy beam path via the corresponding energy beam. Due to the arrangement of the individual irradiation elements as an array, the whole array can be moved relative to the build plane in that the energy beams emitted from the individual irradiation elements can be guided along the respective energy beam paths simultaneously.

Generally, each unit or each element that can be arranged in an irradiation array and is adapted to generate or emit an energy beam and guide the energy beam towards the build plane can be understood as irradiation element in the scope of this application. An irradiation element may, for example, be built as laser diode or an irradiation array may be built of multiple (at least two) optical fibers arranged as an optical fiber array, wherein an energy beam can be coupled into the optical fibers. A corresponding energy beam may be generated via at least one beam generating unit, for example a laser.

The invention is based on the idea that a control unit is provided that is adapted to control an energy input into at least one energy beam path and/or the spot size of at least one energy beam emitted by at least one irradiation element based on at least one parameter relating to an at least partially curved section of at least one energy beam path. According to the invention, the energy input that is achieved via the single energy beams emitted by the at least two irradiation elements of the irradiation array can be controlled via the control unit. In particular, the energy each irradiation element emits into the respective area of the build plane that is covered with the energy beam path the energy beam is guided along can be controlled. The energy input may be controlled dependent on at least one partially curved section of the energy beam path, wherein for example the energy inputs of two different irradiation elements are controlled differently dependent on the curved section.

This allows for an adaption of the energy each irradiation element is adapted to deplete into the build material arranged in the build plane, for example dependent on a desired irradiation pattern. For example, the energy of the individual energy beams can be controlled in that different regions of the build plane that are irradiated via the different irradiation elements are irradiated with different beam energies and/or different spot sizes. For example, a core region of an object may be irradiated with a different beam energy than a shell region of the object.

According to a first embodiment of the invention, the control unit may be adapted to control the energy input and/or the spot size based on an energy input per energy beam path length of at least one energy beam or based on an energy input per beam path. The energy input per energy beam path length defines the energy input independent of the overall length of the energy beam path a corresponding energy beam is guided along. Instead, the control unit is adapted to control the energy input that is depleted via the corresponding energy beam with respect to a standard length or unit length, respectively. In other words, the control unit is adapted to control the energy depleted in a segment of the energy beam path via the energy beam that is emitted by the irradiation elements of the irradiation array. It is also possible to control the energy of at least energy beam and/or the spot size of at least one energy beam dependent on a melting track the corresponding energy beam melts in the build material. The melting track is the track of build material that is irradiated via the energy beam in the build plane. Besides, it is also possible to control the energy input and/or the spot size based on an energy input per beam path. Thus, two different amounts of energy can be depleted via two different irradiation elements in two different areas or beam paths or corresponding sections thereof.

According to another embodiment of the apparatus, the control unit may be adapted to control the energy input per energy beam path length and/or the spot size of the at least two energy beams dependent on the least one parameter relating to an energy beam path length difference. As described before, the irradiation elements are arranged as an irradiation array, wherein the position of the individual irradiation elements relative to one another is fixed due to the array arrangement. Thus, dependent on the motion of the irradiation array, the energy beams emitted by different irradiation elements are guided along different energy beam paths.

In particular, the different energy beam paths may at least partially comprise different path lengths so that two energy beams emitted by two different irradiation elements may be guided along two different energy beam paths with two different path lengths in the same time. As a result, the energy input per energy beam path length of the two energy beams differs, since the exposure time varies between the both energy beam paths.

For example, if the path the irradiation array is guided along comprises at least one curved path portion, the energy beams emitted by two different irradiation elements may be guided along curved path portions with different path lengths. Due to the spatially fixed arrangement of the two irradiation elements, the energy beam that is guided along the energy beam path with the shorter path length will deplete more energy per energy beam path length than the other energy beam that is guided along the energy beam path with the longer path length, since the overall exposure time for both energy beams is the same, but the energy depleted by the first energy beam is depleted on a smaller path and thus, in a smaller volume of build material, since the energy beam path is shorter. By controlling the energy inputs per energy beam path length and/or the spot sizes of energy beams emitted by the at least two irradiation elements, differences in the energy beam path length can be compensated to allow for a homogeneous energy depletion in the build material independent of the irradiation element the respective region of build material is irradiated with or the position of the irradiation element in the irradiation array.

Further, it is possible that the control unit may be adapted to adjust a defined ratio of the energy inputs, in particular per energy beam path length, and/or a defined ratio of the spot sizes of the energy beams emitted by at least two irradiation elements. In particular, the control unit may be adapted to match the energy inputs of at least two energy beams emitted by at least two irradiation elements. In doing so, a defined ratio of the energy inputs and/or the spot sizes can be adjusted in that two different energy beams deplete different or the same energy into build material arranged along the corresponding beam path (or melting track), in particular per energy beam path length. A difference in the energy depletion that is performed via two irradiation elements can be adjusted dependent on the irradiation pattern that has to be irradiated in the build plane. Further, another adjustment criterion can be set, wherein the adjustment of the energy depleted via the at least two irradiation elements can be adjusted dependent on the adjustment criterion. The adjustment criterion may for example relate to a defined difference regarding the energy inputs of two different energy beams.

For example, a so-called "core and shell"-irradiation requires different energy inputs in different regions of the object that is built in the additive manufacturing process. For example, in a first region a different amount of energy has to be depleted than in a second region of the build plane. By defining a ratio of the energy inputs that are achieved via the at least two irradiation elements, it is possible to have different regions of the build plane irradiated with energy beams comprising different beam energies.

Particularly, it is further possible to match the energy inputs and/or the spot sizes of the at least two energy beams emitted by the at least two irradiation elements. This allows for achieving a homogeneous energy input in the irradiated region(s) of the build plane, wherein it can be assured that the energy depleted along the at least two energy beam paths the at least two energy beams are guided along is the same. Thus, for example, the energy (and/or the spot size) of the energy beam that is guided along the longer energy beam path (if differences in the path length of the at least two energy beam paths occur) has to be raised (has to be reduced) compared to the other energy beam that is guided along the shorter energy beam path or the energy of the energy beam guided along the shorter energy beam path is lowered (the spot size is increased), respectively. Therefore, the energy that is depleted with respect to the energy beam path length can be matched to ensure that build material is irradiated with the same energy along the two energy beam paths.

The at least one parameter may be or may comprise
- a moving speed of the at least one energy beam along the corresponding energy beam path and/or
- a moving speed difference of at least two energy beams of the same irradiation array along the corresponding energy beam paths and/or
- a length of the energy beam path of at least one energy source and/or
- a length difference of at least two energy beam paths of different energy beam sources of the same irradiation array and/or
- a curvature of at least one part of the at least one energy beam path and/or
- a radius of at least one part of the at least one energy beam path
- a writing time of at least one energy beam source and/or
- a writing time difference of at least two energy beam sources.

In other words, the at least one parameter is based on a path difference of two energy beam paths two energy beams emitted by two irradiation elements are guided along. The resulting path difference may be determined in various ways, for example regarding the moving speed of at least one energy beam along the corresponding energy beam path.

Dependent on the geometry of the irradiation array, in particular the arrangement of the individual irradiation elements or the spatial relation between the individual irradiation elements it is possible to define one or more "neutral" irradiation elements. The neutral irradiation element emits an energy beam that is guided along a "neutral" (central) beam path. Dependent on the location of the other irradiation elements of the irradiation array with respect to the "neutral" irradiation element the emitted energy beams are guided along energy beam paths that are longer or shorter than the "neutral" energy beam path the energy beam emitted by the "neutral" irradiation element is guided along.

To control the energy of the respective energy beams the moving speed of the individual energy beam can be taken into calculation, wherein faster moving energy beams and slower moving energy beams can be compensated by adjusting the energy input accordingly. Further, a moving speed difference of at least two energy beams of the same irradiation array along their energy beam paths can be used as parameter. Accordingly, if the at least two energy beams are guided along different energy beam paths, in particular energy beam paths with different path lengths, a moving speed difference will occur, since the energy beams are guided along their paths in the same time. Hence, the moving speed as well as the moving speed difference can be used to control the energies of the energy beams.

Related with the moving speed or the moving speed difference, the length of an energy beam path as well as a length difference of at least two energy beam paths two energy beams of the same irradiation array are guided along can be taken as basis for the control of the energies of the energy beams emitted by different irradiation elements.

A writing time can further be defined that is also related with the moving speed, the moving speed difference or the path length or a path length difference. The control of the energies of at least two energy beams emitted by two different irradiation elements of the same irradiation array can be based on the writing time of at least one energy beam or a writing time difference of at least two energy beams. The writing time is the result of the correlation of the moving speed and the beam path length the energy beam is guided along. In other words, the writing time is the time required or available to irradiate a defined path length. The writing time defines how long build material along the energy beam path is irradiated or how long the respective energy beam is focused on a segment of the energy beam path, respectively.

As, in particular, in curved sections or portions of energy beam paths a length difference of two energy beam paths of two energy beams emitted by two different irradiation elements occur, a curvature and/or a radius of at least one part of the at least one energy beam path can be determined to control the energy of at least one energy beam. As described before, if two energy beams are guided along two energy beam paths that are curved, for example, if a ring or a disk is irradiated in the build plane via multiple energy beams emitted via multiple irradiation elements, the single energy beams are guided along different energy beam paths, in particular on different radii. Accordingly, energy beams that are guided along energy beam paths on a smaller radius are moved slower than energy beams guided along energy beam paths on a larger ("outer") radius of the curved ("circle") shape. Hence, the energy of the energy beams can be controlled dependent on the curvature and/or the radius of the respective energy beam path.

To control the energy and/or the spot size of at least one energy beam emitted by an irradiation element of the irradiation array, different approaches are feasible, in particular the control unit may be adapted to control the energy input by an adjustment of at least one irradiation parameter of at least one irradiation element of the irradiation array. By controlling at least one irradiation parameter of the at least one irradiation element the energy depleted in the build material can directly be influenced or controlled, in particular build material arranged along the energy beam path (or the melting track) the energy beam is guided along. The irradiation parameter describes the irradiation process, wherein the irradiation parameter generally may comprise any parameter the irradiation process can be affected with. By adjusting the irradiation parameter the energy depleted with the respective energy beam can be adjusted.

Preferably, the control unit may be adapted to adjust the at least one irradiation parameter dependent on at least one motion parameter of the irradiation array, in particular dependent on a movement of the irradiation array. As described before, if at least two energy beams are guided along energy beam paths with different energy beam path lengths, an adjustment or a control of the energy of at least one energy beam is necessary to provide a homogeneous irradiation of the build material. Such path differences particularly occur with different motion patterns of the irradiation array, for example with movements of the irradiation array around a pivot axis.

The control unit of the apparatus may further be adapted to adjust at least one irradiation parameter individually for at least two irradiation elements of the irradiation array, in particular individually for each irradiation element of the irradiation array. As described before, it is possible to arrange one irradiation element or define one irradiation element as "neutral". The "neutral" irradiation element may, for example, be arranged centrally on a common irradiation element carrier, preferably on or parallel to a central axis of the common irradiation element carrier.

Dependent on the irradiation pattern that has to be achieved by the irradiation of the irradiation array, it is necessary to control the energy depleted via the individual energy beams individually. This is made possible by the control unit being adapted to adjust irradiation parameters individually for different irradiation elements. Corresponding to the desired irradiation pattern, in particular the single regions assigned to be irradiated with the individual irradiation elements, the control unit may adjust the irradiation parameters of the irradiation elements accordingly.

The at least one irradiation parameter may be or may comprise
- an energy of at least one energy source and/or
- a spot geometry of at least one energy source and/or
- an exposure time.

Therefore, the irradiation parameter may directly influence the energy that is depleted in the build material. In particular, the energy of the energy beam can be adjusted. Of course, parameters relating to the energy of the energy beam can also be adjusted, for example the intensity or the power of the energy beam.

Further, it is possible to directly control a spot geometry of the at least one energy beam, wherein as "spot" of the energy beam the pattern on the build plane is referred to that is irradiated with the energy beam being guided onto the build plane. The term "spot geometry" may refer to multiple parameters or may be influenced by multiple parameters, wherein for example, the size of the spot of the energy beam in the build plane and/or the shape of the spot in the build plane may be contained in or contribute to the spot geometry. For example, the spot size may specify the area that is irradiated with the static energy beam on the build plane. The shape of the spot may specify the geometry that is irradiated with the static energy beam, for example a circular shape. Additionally, an energy beam profile can be taken into calculation as well, for example the energy distribution in the beam spot, for example a so-called "top hat" or "Gaussian" energy distribution in the spot.

In addition, a writing time of the energy beam can influence the irradiation parameter or can be used as the irradiation parameter. The writing time, as already described before, is the time required to irradiate a corresponding path length or a corresponding area of the build plane. In other words, the writing time refers to the time the energy beam stays in the same spot or on the same segment of the energy beam path.

The apparatus may further be improved in that the irradiation array is translatory movable relative to the build plane. The translatory movement can be performed either by moving the array translatory relative to the build plane, wherein the irradiation array is moved and the build plane is static or the translatory movement can be achieved by moving the build plane translatory relative to a static irradiation array. Of course, it is also possible to move both the irradiation array and the build plane relative to one another and achieve the translatory movement by a superposition of the irradiation array movement and the build plane movement. By moving the irradiation array relative to the build plane it is possible to irradiate every part of the build plane via the irradiation array.

The irradiation device may further be adapted to control the movement of the irradiation array dependent on at least one energy beam path, wherein the irradiation array is pivotable about a pivot axis, in particular a pivot axis essentially perpendicular to a build plane of the apparatus. Of course, the translatory movement of the irradiation array relative to the build plane and the movement of the irradiation array, for example, around a pivot axis of the irradiation array, may be combined arbitrarily. The pivotable movement of the irradiation array allows for guiding the different energy beams emitted via the irradiation elements of the irradiation array along curved beam paths that are arranged in parallel, for example at least partially circular beam paths. Dependent on the energy beam paths that have to be "written" on the build plane, the irradiation device may pivot the irradiation array to control the relative position of the single irradiation elements and therefore, control the position of the energy beams on the build plane.

The irradiation array of the apparatus may further be inclinable relative to a moving direction along the energy beam path. Hence, the irradiation array may be oriented relative to the moving direction in an arbitrary angle, wherein the inclination may, for example, be chosen with respect to the energy beam paths of the individual energy beams.

Further, a carrying device is provided that is carrying build material arranged in a build plane of the apparatus, wherein the carrying device is adapted to pivotably move the build plane relative to at least one irradiation element of the irradiation array. Therefore, the carrying device can move the build plane relative to at least one irradiation element, wherein a pivotable movement of the build plane about at least one pivot axis is feasible. For example, the carrying device may rotate the build plane about a central axis of the carrying element carrying the build material.

Additionally, an application unit may be provided that is adapted to apply build material onto the build plane, wherein the carrying device is adapted to height-adjustably move the build plane, in particular pivot the build plane relative to the application unit and/or wherein the application unit is adapted to height-adjustably move relative to the build plane. The application unit is provided for applying build material onto the build plane. Thus, the layerwise selective irradiation and consolidation of the build material is made possible, in that build material arranged in the build plane is irradiated and thereby consolidated via the energy beams emitted via the irradiation elements of the at least one irradiation array. After the irradiation process step is finished, a fresh layer of build material can be applied onto the former build plane. Preferably, the build plane can be lowered in advance to allow for fresh build material to be applied via the application unit.

In particular, the application unit may be height adjustably movable relative to the build plane in that build material can continuously be applied onto the build plane. It is also possible to have the build plane pivotably arranged in that the build plane is pivoted relative to the application unit. In both approaches it is possible to continuously apply build material onto the build plane that can subsequently be irradiated. For example, build material in the build plane is irradiated in a region of the build plane, wherein the build plane and the irradiation device are rotated or pivoted to one another, respectively. The application device applies fresh build material in a region that is not irradiated with the irradiation device. Thus, a continuous manufacturing process is possible without the need for pausing the irradiation of build material while fresh build material is applied.

Besides, the disclosure relates to a not claimed irradiation device for an apparatus for additively manufacturing three-dimensional objects, in particular an apparatus as described before, which irradiation device comprises at least two irradiation elements arranged as an irradiation array, in particular on at least one common irradiation element carrier, wherein each irradiation element is adapted to emit an energy beam guidable along an, in particular at least partially curved, energy beam path in the build plane, wherein the irradiation array is moveable relative to the build plane, wherein a control unit is provided that is adapted to control an energy input into at least one energy beam path and/or the spot size of at least one energy beam emitted by at least one irradiation element based on at least one parameter relating to an at least partially curved section of at least one energy beam path . The control unit may be considered part of the irradiation device or part of the apparatus, wherein the control unit may be connectable or connected with the irradiation device. In both approaches the control unit is connected with the irradiation device in a mounted state in the apparatus.

Additionally, the invention relates to a method for operating at least one apparatus for additively manufacturing three-dimensional objects by means of successive layerwise selective irradiation and consolidation of layers of a build material which can be consolidated by means of an energy source in accordance with claim 13.

Thus, an energy input into the build plane may be determined and subsequently, an adjustment to the energy inputs of at least on irradiation element can be performed. By adjusting or controlling the energy input and/or the spot size, the amount of energy depleted in the build material can be set for the corresponding beam path (irradiated area or melting track). In regions of the build plane, in particular curved sections of the beam paths, inequalities in the distribution of the depleted energy can be avoided. For example, at least one section of at least one energy beam path may be analyzed via the control unit, in particular regarding a curved section of the energy beam. At least one parameter may be derived via the analysis, e.g. relating to a length difference between at least two energy beam paths. Subsequently, the energy inputs achieved via corresponding irradiation elements may be adjusted accordingly, to achieve a defined ratio of energy inputs, in particular per energy beam path length or per energy beam path. Preferably, the energy inputs for at least two energy beams are matched in that the energy depleted per beam path length is equal.

Of course, all details, features and advantages described with respect to the inventive apparatus are fully transferable to the inventive irradiation device and the inventive method. Self-evidently, the inventive method can be performed on the inventive apparatus.

Exemplary embodiments of the invention are described with reference to the Fig. The Fig. are schematic diagrams, wherein
- Fig. 1: shows a detail of an inventive apparatus according to a first embodiment with an inventive irradiation device;
- Fig. 2: shows the apparatus from Fig. 1 in a top view; and
- Fig. 3: a detail of an inventive apparatus in a top view according to a second embodiment.

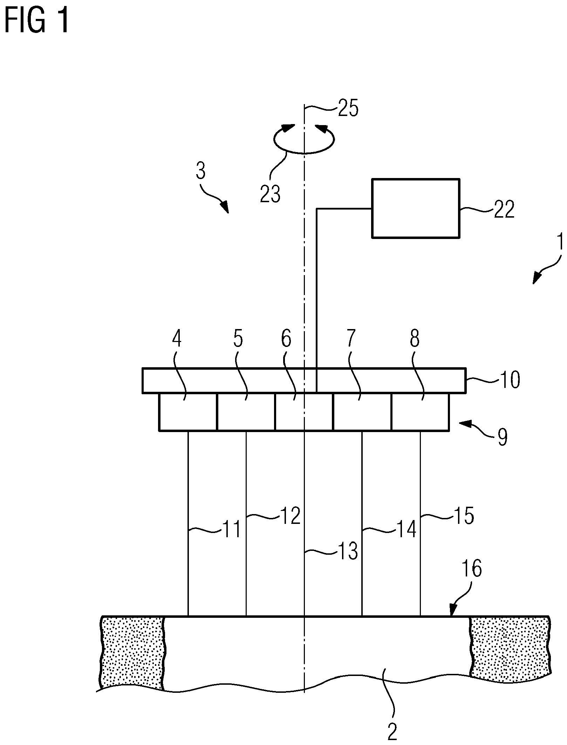

Fig. 1 shows an apparatus 1 according to a first exemplary embodiment, wherein the apparatus 1 is an apparatus 1 for additively manufacturing of three-dimensional objects 2 by means of successive layerwise selective irradiation and consolidation of layers of a build material which can be consolidated by means of an irradiation device 3. The irradiation device 3 comprises five irradiation elements 4 - 8 arranged as an irradiation array 9. The irradiation elements 4 - 8 that are arranged as irradiation array 9 are carried by a common irradiation element carrier 10, for example a frame in which the individual irradiation elements 4 - 8 are mounted.

Each irradiation element 4 - 8 is adapted to emit an energy beam 11 - 15 towards a build plane 16. Unconsolidated build material is arranged in the build plane 16, wherein the build material is consolidated upon the irradiation with one of the energy beams 11 - 15. Thus, the object 2 is manufactured by selectively and successively layerwise irradiating layers of the build material via the energy beams 11 -15.

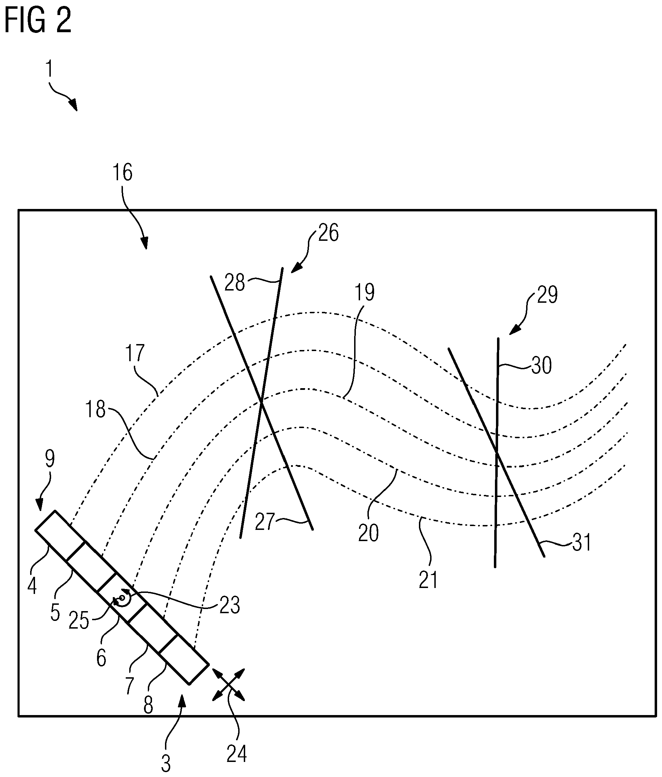

The irradiation array 9 is movable relative to the build plane 16 in that the energy beams 11 - 15 emitted via the irradiation elements 4 - 8 can be guided along the respective beam paths 17 - 21. The beam paths 17 - 21 can best be derived from Fig. 2, wherein the beam paths 17 - 21 all lie in the build plane 16 and refer to the path the individual energy beams 11 - 15 are guided along to irradiate the build material arranged in the build plane 16.

According to this embodiment, as depicted in the Fig. 1, 2, the irradiation elements 4 - 8 are, for example, built as laser diodes, whereby it is also possible to have other irradiation elements, such as lasers or optical fibers. Further, the energy beams 11 - 15 could be generated by a separate beam generating unit (not shown), wherein the single irradiation elements 4 - 8 can be provided merely to guide the energy beams 11 - 15 onto the build plane 16. Of course, a single energy beam could be split into the individual energy beams 11 - 15. Thus, the irradiation array 9 could be built as optical fiber array.

As can further be derived from Fig. 1, the irradiation device 3 comprises a control unit 22 that is adapted to control several irradiation parameters of the energy beams 11 - 15. Preferably, the control unit 22 is adapted to control the energy of each energy beam 11 - 15 and/or the spot geometry, in particular the spot size. The control unit 22 is further adapted to control a movement of the irradiation array 9, for example via a drive device (not shown). The movement of the irradiation array 9 may comprise a pivot movement as depicted by an arrow 23 and a lateral movement, e.g. in a x-and y- direction, as depicted by arrows 24. Of course, additionally or alternatively to the movement of the irradiation array 9, the build plane 16 could be moved relative to the irradiation array 9.

Due to the relative movement of the irradiation array 9 and the build plane 16 the energy beams 11 - 15 can be guided along the energy beam paths 17 - 21. As depicted in Fig. 2, due to curved parts of the energy beam paths 17 - 21, the energy beam paths 17 - 21 comprise different path lengths. Dependent on a radius or a curvature of the individual energy beam paths 17 - 21 the lengths of the energy beam paths 17 - 21 may differ. In a curved section, energy beams 11 - 15 guided along energy beam paths 17 - 21 that are arranged on a larger radius are traveling a longer path than those energy beams 11 - 15 traveling on an energy beam path 17 - 21 that is arranged on a smaller radius. Thus, a path length difference occurs in curved sections of the energy beam paths 17 - 21.

Further, the energy beam path 19 the energy beam 13 is guided along may be referred to as "neutral" beam path 19 as the energy beam 13 is emitted in a central axis 25 the irradiation array 9 is pivotable about. Thus, dependent on the curvature of the energy beam paths 17 - 21 the energy beam paths 17, 18 and 20, 21 have a positive or negative path difference compared to the energy beam path 19. In other words, dependent on the curvature, the energy beam paths 17, 18 are longer than the energy beam path 19 and the energy beam paths 20, 21 are shorter than the energy beam path 19 or vice versa.

For example, in position 26 the length of the energy beam path 19 is marked with line 27. As can be derived from Fig. 2, the lengths of the beam paths 17, 18 are longer and the lengths of the beam paths 20, 21 are shorter than the length of the "neutral" energy beam path 19, as depicted with line 28. Analogously, in position 29 the length of the energy beam path 19 is shown via line 30 and the lengths of the energy beam paths 17, 18 and 20, 21 that deviate from the "neutral" energy beam path 19 are depicted via line 31.

Hence, the energy beams 11 - 15 are moved along different energy beam paths 17 - 21 of different lengths in the same time. This results in different exposure times for the build material arranged along the energy beam paths 17 - 21. To compensate different exposure times and different consolidation behavior of the build material in the build plane 16, the control unit 22 is adapted to control the irradiation parameters of the energy beams 11 - 15 individually to match the energy input, in particular per energy beam path length or per energy beam path, of the energy beams 11 - 15 that are emitted via the irradiation elements 4 - 8.

It is also possible to define a ratio of the energy inputs per energy beam path length of the energy beams 11 - 15 emitted by the irradiation elements 4 - 8, in particular dependent on the geometry of the object 2 that has to be irradiated in the build plane 16. Therefore, it is possible to deplete different amounts of energy via each energy beam 11 - 15. Further, another adjustment criterion can be set, wherein the adjustment of the energy depleted via the at least two irradiation elements can be adjusted dependent on the adjustment criterion.

In particular, different regions of the build plane 16 can be defined in that a different amount of energy is depleted in the different regions. For example, a "core and shell"-irradiation pattern can be irradiated in the build material arranged in the build plane 16, wherein in a "core or inner region" a different amount of energy is depleted than in a "shell or outer region". For instance, the energy beams 13, 14 and 15 may deplete more energy than the energy beams 11 and 12 with respect to the energy beam path length.

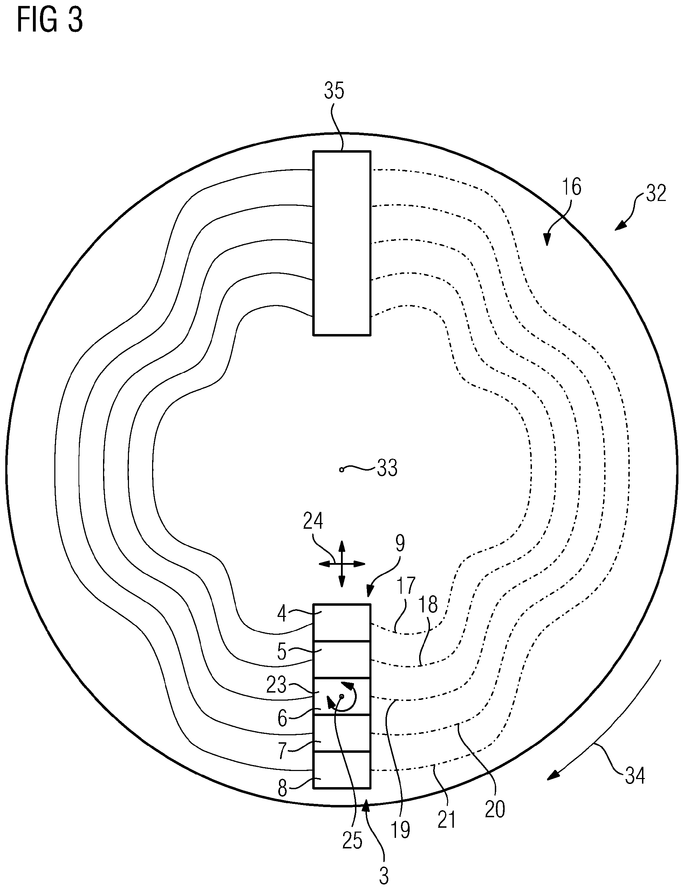

Fig. 3 shows an apparatus 32 according to a second embodiment of the invention. The apparatus 32 comprises an irradiation device 3, as already shown in the Fig. 1, 2. Thus, the same numerals are used for the same parts. As can be derived from Fig. 3, the irradiation device 3, in particular the irradiation array 9 is moved relative to the build plane 16 (as depicted via the arrows 23, 24) to guide the energy beams 11 - 15 along the corresponding energy beam paths 17 - 21. Additionally, the build plane 16 is pivotable about a pivot axis 33 as indicated via an arrow 34.

The apparatus 32 further comprises a build material application unit 35 that is adapted to apply "fresh" build material onto the build plane 16. Thus, build material in the build plane 16 is irradiated via the irradiation device 3 in that the energy beams 11 - 15 are guided along the corresponding energy beam paths 17 - 21. By rotating the build plane 16 around the pivot axis 33 fresh build material is applied in the region that has already been irradiated via the irradiation device 3. Of course, it is also possible to rotate the application unit 35 and the irradiation device 3 around the pivot axis 33.

Thus, a continuous manufacturing process is feasible, wherein the manufacturing process does not has to be paused for applying a fresh layer of build material. The build plane 16 is height-adjustably supported. Hence, the build plane 16 can be lowered continuously to allow for fresh build material to be applied on the build plane 16. In particular, a helical object can be built by continuously irradiating build material in the build plane 16 and applying fresh build material. Of course, it is also possible to arrange the application unit 35 and the irradiation device 3 height-adjustable. Hence, the application unit 35 and the irradiation device can be raised continuously to allow for fresh build material to be applied on the build plane 16.

All features, details and advantages described with respect to the embodiments depicted in the Fig. 1 - 3 can be combined as long as the combination falls within the scope of the claims. Of course, the apparatus 1, 32 is adapted to perform the inventive method.

## Claims

1. Apparatus (1, 32) for additively manufacturing of three-dimensional objects (2) by means of successive layerwise selective irradiation and consolidation of layers of a build material which can be consolidated by means of an irradiation device (3) comprising at least two irradiation elements (4 - 8) arranged as an irradiation array (9), in particular on at least one common irradiation element carrier (10), wherein each irradiation element (4 - 8) is adapted to emit an energy beam (11 - 15) guidable or guided along an, in particular at least partially curved, energy beam path (17 - 21) in the build plane (16), wherein the irradiation array (9) is moveable relative to the build plane (16), wherein a control unit (22) is provided that is adapted to control an energy input into at least one energy beam path (17 - 21) and/or the spot size of at least one energy beam (11 -15) emitted by at least one irradiation element (4 - 8) based on at least one parameter relating to an at least partially curved section of at least one energy beam path (17 - 21), wherein the apparatus further comprises a carrying device carrying build material arranged in a build plane (16) of the apparatus (1, 32), wherein the carrying device is adapted to pivotably move the build plane (16) relative to at least one irradiation element (4 - 8) of the irradiation array (9).

2. Apparatus according to claim 1, wherein the control unit (22) is adapted to control the energy input and/or the spot size based on an energy input per energy beam path length of at least one energy beam (11 - 15) or based on an energy input per beam path (17 - 21).

3. Apparatus according to claim 1 or 2, wherein the control unit (22) is adapted to control the energy input per energy beam path length and/or the spot size of the at least two energy beams (11 - 15) dependent on the at least one parameter relating to an energy beam path length difference.

4. Apparatus according to one of the preceding claims, wherein the control unit (22) is adapted to adjust a defined ratio of the energy inputs and/or a defined ratio of spot sizes, in particular per energy beam path length, of energy beams (11 - 15) emitted by at least two irradiation elements (4 - 8), in particular matching the energy inputs of at least two energy beams (11 - 15) emitted by at least two irradiation elements (4 - 8).

5. Apparatus according to claim 2 or 3, wherein the at least one parameter is or comprises
- a moving speed of the at least one energy beam (11 - 15) along the corresponding energy beam path (17 - 21) and/or
- a moving speed difference of at least two energy beams (11 - 15) of the same irradiation array (9) along the corresponding energy beam path (17 - 21) and/or
- a length of the energy beam path (17 - 21) of at least one irradiation element (4 - 8) and/or
- a length difference of at least two energy beam path of different irradiation elements (4 - 8) of the same irradiation array (9) and/or
- a curvature of at least one part of the at least one energy beam path (17 - 21) and/or
- a radius of at least one part of the at least one energy beam path (17 - 21) and/or
- a writing time of at least one energy beam (11 - 15) and/or
- a writing time difference of at least two energy beams (11 - 15).

6. Apparatus according to one of the preceding claims, wherein the control unit (22) is adapted to control the energy input via an adjustment of at least one irradiation parameter of at least one irradiation element (4 - 8) of the irradiation array (9).

7. Apparatus according to claim 6, wherein the control unit (22) is adapted to adjust the at least one irradiation parameter dependent on at least one motion parameter of the irradiation array (9), in particular a pivot movement.

8. Apparatus according to claim 6 or 7, wherein the control unit (22) is adapted to adjust at least one irradiation parameter individually for at least two irradiation elements (4 - 8) of the irradiation array (9), in particular individually for each irradiation element (4 - 8) of the irradiation array (9).

9. Apparatus according to one of the claims 6 to 8, wherein the at least one irradiation parameter is or comprises
- an energy of at least one energy beam (11 - 15) and/or
- a spot geometry of at least one energy beam (11 - 15) and/or
- a writing time.

10. Apparatus according to one of the preceding claims, wherein the irradiation array (9) is translatory movable relative to the build plane (16).

11. Apparatus according to one of the preceding claims, wherein the irradiation device (3) is adapted to control a pivot movement of the irradiation array (9) dependent on at least one energy beam path (17 - 21), wherein the irradiation array (9) is pivotable about a pivot axis, in particular a pivot axis (25) essentially perpendicular to a build plane (16) of the apparatus (1, 32).

12. Apparatus according to claim 11, wherein the irradiation array (9) is inclinable relative to a moving direction along the energy beam path (17 - 21).

13. Method for operating at least one apparatus (1, 32) for additively manufacturing three-dimensional objects by means of successive layerwise selective irradiation and consolidation of layers of a build material which can be consolidated by means of an energy source, in particular an apparatus (1, 32) according to one of the claims 1 to 12, wherein the apparatus (1, 32) comprises an irradiation device (3) with an irradiation array (9) with at least two irradiation elements (4 - 8) arranged as an irradiation array (9), in particular on at least one common irradiation element carrier (10), wherein each irradiation element (4 - 8) is adapted to emit an energy beam (11 - 15) guidable or guided along an, in particular at least partially curved, energy beam path (17 - 21) in the build plane (16), wherein the irradiation array (9) is moveable relative to the build plane (16), wherein an energy input into at least one energy beam path (17 - 21) and/or the spot size of at least one energy beam (11 -15) emitted by at least one irradiation element (4 - 8) is controlled based on at least one parameter relating to an at least partially curved section of at least one energy beam path (17 - 21), wherein the apparatus further comprises a carrying device carrying build material arranged in a build plane (16) of the apparatus (1, 32), wherein the build plane (16) is pivotably moved by the carrying device relative to at least one irradiation element (4 - 8) of the irradiation array (9).

## Patentansprüche

1. Vorrichtung (1, 32) zur additiven Herstellung von dreidimensionalen Objekten (2) mittels sukzessiver schichtweiser selektiver Bestrahlung und Verfestigung von Schichten eines verfestigbaren Aufbaumaterials mittels einer Bestrahlungseinrichtung (3) mit mindestens zwei als Bestrahlungsfeld (9) angeordneten Bestrahlungselementen (4 - 8), insbesondere auf mindestens einem gemeinsamen Bestrahlungselementträger (10), wobei jedes Bestrahlungselement (4 - 8) einen entlang eines, insbesondere zumindest teilweise gekrümmten, Energiestrahlweges (17 - 21) in der Aufbauebene (16) lenkbaren oder geführten Energiestrahl (11 - 15) emittieren kann, Bestrahlungselement (4 - 8) einen Energiestrahl (11 - 15) zu emittieren, der entlang eines, insbesondere zumindest teilweise gekrümmten, Energiestrahlengangs (17 - 21) in der Bauebene (16) lenkbar oder geführt ist, wobei das Bestrahlungsarray (9) relativ zur Bauebene (16) bewegbar ist, wobei eine Steuereinheit (22) vorgesehen ist, die ausgebildet ist, einen Energieeintrag in zumindest einen Energiestrahlengang (17 - 21) und/oder die Spotgröße zumindest eines von zumindest einem Bestrahlungselement (4 - 8) emittierten Energiestrahls (11 - 15) basierend auf zumindest einem einen zumindest teilweise gekrümmten Abschnitt zumindest eines Energiestrahlengangs (17 - 21) betreffenden Parameter zu steuern,
wobei die Vorrichtung ferner umfasst
eine Tragevorrichtung, die Aufbaumaterial trägt, das in einer Bauebene (16) der Vorrichtung (1, 32) angeordnet ist, wobei die Trageinrichtung so angepasst ist, dass sie die
die Aufbauplatte (16) relativ zu mindestens einem
Bestrahlungselement (4 - 8) der Bestrahlungsanordnung (9) zu bewegen.

2. Vorrichtung nach Anspruch 1, wobei die Steuereinheit (22) eingerichtet ist, den Energieeintrag und/oder die Spotgröße auf der Basis eines Energieeintrags pro Energiestrahlweglänge mindestens eines Energiestrahls (11 - 15) oder auf der Basis eines Energieeintrags pro Strahlweg (17 - 21) zu steuern.

3. Vorrichtung nach Anspruch 1 oder 2, wobei die Steuereinheit (22) dazu eingerichtet ist, den Energieeintrag pro Energiestrahlweglänge und/oder die Spotgröße der mindestens zwei Energiestrahlen (11 - 15) in Abhängigkeit von dem mindestens einen Parameter zu steuern, der sich auf eine Energiestrahlweglängendifferenz bezieht.

4. Vorrichtung nach einem der vorhergehenden Ansprüche, wobei die Steuereinheit (22) ausgebildet ist, ein definiertes Verhältnis der Energieeinträge und/oder ein definiertes Verhältnis von Spotgrößen, insbesondere pro Energiestrahlweglänge, von durch mindestens zwei Bestrahlungselemente (4 - 8) emittierten Energiestrahlen (11 - 15) einzustellen, insbesondere die Energieeinträge von mindestens zwei durch mindestens zwei Bestrahlungselemente (4 - 8) emittierten Energiestrahlen (11 - 15) anzupassen.

5. Vorrichtung nach Anspruch 2 oder 3, wobei der mindestens eine Parameter
- eine Bewegungsgeschwindigkeit des mindestens einen Energiestrahls (11 - 15) entlang des
entsprechenden Energiestrahlengang (17-21) und/oder
- eine Bewegungsgeschwindigkeitsdifferenz von mindestens zwei Energiestrahlen (11
- 15) desselben Bestrahlungsfeldes (9) entlang des entsprechenden Energiestrahlenweges (17 - 21) und/oder
- eine Länge des Energiestrahlengangs (17 - 21) mindestens eines Bestrahlungselements (4 - 8) und/oder
- eine Längendifferenz von mindestens zwei Energiestrahlengängen verschiedener Bestrahlungselemente (4 - 8) desselben Bestrahlungsfeldes (9) und/oder
- eine Krümmung mindestens eines Teils des mindestens einen Energiestrahlengangs (17 -21) und/oder
- einen Radius mindestens eines Teils des mindestens einen Energiestrahlengangs (17
- 21) und/oder
- eine Schreibzeit des mindestens einen Energiestrahls (11 - 15) und/oder
- eine Schreibzeitdifferenz von mindestens zwei Energiestrahlen (11 - 15)
ist oder umfasst.

6. Vorrichtung nach einem der vorhergehenden Ansprüche, wobei die Steuereinheit (22) ausgebildet ist, den Energieeintrag über eine Einstellung mindestens eines Bestrahlungsparameters mindestens eines Bestrahlungselements (4 - 8) des Bestrahlungsfeldes (9) zu steuern.

7. Vorrichtung nach Anspruch 6, wobei die Steuereinheit (22) ausgebildet ist geeignet ist, den mindestens einen Bestrahlungsparameter in Abhängigkeit von mindestens einem Bewegungsparameter des Bestrahlungsfeldes (9), insbesondere einer Schwenkbewegung, einzustellen.

8. Vorrichtung nach Anspruch 6 oder 7, wobei die Steuereinheit (22) ausgebildet ist, den mindestens einen Bestrahlungsparameter individuell für mindestens zwei Bestrahlungselemente (4 - 8) des Bestrahlungsfeldes (9), insbesondere individuell für jedes Bestrahlungselement (4 - 8) des Bestrahlungsfeldes (9), einzustellen.

9. Vorrichtung nach einem der Ansprüche 6 bis 8, wobei der mindestens eine Bestrahlungsparameter ist oder umfasst
eine Energie mindestens eines Energiestrahls (11 - 15) und/oder eine Spotgeometrie des mindestens einen Energiestrahls (11 - 15) und/oder eine Schreibzeit ist.

10. Vorrichtung nach einem der vorhergehenden Ansprüche, wobei das Bestrahlungsfeld (9) translatorisch relativ zur Bauebene (16) bewegbar ist.

11. Vorrichtung nach einem der vorangehenden Ansprüche, wobei
die Bestrahlungsvorrichtung (3) eingerichtet ist, eine Schwenkbewegung des Bestrahlungsfeldes (9) in Abhängigkeit von mindestens einem Energiestrahlengang (17 - 21) zu steuern, wobei das Bestrahlungsfeld (9) um eine Schwenkachse, insbesondere eine im Wesentlichen senkrecht zu einer Bauebene (16) der Vorrichtung (1, 32) stehende Schwenkachse (25), schwenkbar ist.

12. Vorrichtung nach Anspruch 11, wobei das Bestrahlungsfeld (9) relativ zu einer Bewegungsrichtung entlang des Energiestrahlengangs (17- 21).

13. Verfahren zum Betreiben mindestens einer Vorrichtung (1, 32) zur additiven Herstellung von dreidimensionalen Gegenständen durch aufeinanderfolgende schichtweise selektive Bestrahlung und Verfestigung von Schichten eines mittels einer Energiequelle verfestigbaren Aufbaumaterials, insbesondere einer Vorrichtung (1, 32) nach einem der Ansprüche 1 bis 12, wobei die Vorrichtung (1, 32) eine Bestrahlungseinrichtung (3) mit einem Bestrahlungsarray (9) mit mindestens zwei als Bestrahlungsarray (9) angeordneten Bestrahlungselementen (4 - 8), insbesondere auf mindestens einem gemeinsamen Bestrahlungselementträger (10), umfasst, wobei jedes Bestrahlungselement (4 - 8) dazu eingerichtet ist, einen entlang eines insbesondere zumindest teilweise gekrümmten Energiestrahls (11 - 15) lenkbaren oder geführten Energiestrahl (11 - 15) zu emittieren, insbesondere zumindest teilweise gekrümmten Energiestrahlengang (17 - 21) in der Bauebene (16) zu emittieren, wobei das Bestrahlungsarray (9) relativ zur Bauebene (16) bewegbar ist, wobei ein Energieeintrag in zumindest einen Energiestrahlengang (17 - 21) und/oder die Spotgröße zumindest eines von zumindest einem Bestrahlungselement (4 - 8) emittierten Energiestrahls (11 - 15) in Abhängigkeit von zumindest einem einen zumindest teilweise gekrümmten Abschnitt zumindest eines Energiestrahls (11 - 15) betreffenden Parameter gesteuert wird.
gekrümmter Abschnitt mindestens eines Energiestrahlengangs (17 - 21), wobei die Vorrichtung ferner Folgendes umfasst
eine Trägervorrichtung, die Aufbaumaterial trägt, das in einer Aufbauebene (16) der Vorrichtung (1, 32) angeordnet ist, wobei die Aufbauebene (16) durch die Tragevorrichtung relativ zu mindestens einem Bestrahlungselement (4 - 8) des Bestrahlungsfeldes schwenkbar bewegt wird.

## Revendications

1. Dispositif (1, 32) pour la fabrication additive d'objets tridimensionnels (2) au moyen d'une irradiation et d'une solidification sélectives successives, couche par couche, de couches d'un matériau de construction solidifiable, au moyen d'un dispositif d'irradiation (3) comportant au moins deux éléments d'irradiation (4 - 8) disposés en tant que champ d'irradiation (9), en particulier sur au moins un support d'éléments d'irradiation commun (10), dans lequel chaque élément d'irradiation (4 - 8) peut émettre un faisceau d'énergie (11 - 15) qui peut être dirigé ou guidé le long d'un trajet de faisceau d'énergie (17 - 21), en particulier au moins partiellement incurvé, dans le plan de montage (16), l'élément d'irradiation (4 - 8) émettant un faisceau d'énergie (11 - 15) qui est orientable ou guidé le long d'une trajectoire de faisceau d'énergie (17 - 21), en particulier au moins partiellement courbée, dans le plan de construction (16), le champ d'irradiation (9) étant mobile par rapport au plan de construction (16), une unité de commande (22) étant prévue, qui est réalisée pour pour commander une entrée d'énergie dans au moins un trajet de faisceau d'énergie (17 - 21) et/ou la taille du spot d'au moins un faisceau d'énergie (11 - 15) émis par au moins un élément d'irradiation (4 - 8) sur la base d'au moins un paramètre relatif à une partie au moins partiellement incurvée d'au moins un trajet de faisceau d'énergie (17 - 21), l'appareil comprenant en outre
un dispositif de support qui supporte le matériau d'accumulation à placer dans une plan de construction (16) de l'appareil (1, 32), le dispositif de support étant adapté pour supporter le plan de construction (16) de l'appareil (1, 32).
le plan de construction (16) par rapport à au moins l'un des éléments suivants élément d'irradiation (4-8) de l'ensemble d'irradiation (9).

2. Dispositif selon la revendication 1, dans lequel l'unité de commande (22) est adaptée pour commander l'entrée d'énergie et/ou la taille du point sur la base d'une entrée d'énergie par longueur de trajet de faisceau d'énergie d'au moins un faisceau d'énergie (11 - 15) ou sur la base d'une entrée d'énergie par trajet de faisceau (17 - 21).

3. Dispositif selon la revendication 1 ou 2, dans lequel l'unité de commande (22) est agencée pour commander l'entrée d'énergie par longueur de trajet de faisceau d'énergie et/ou la taille de point des au moins deux faisceaux d'énergie (11 - 15) en fonction de l'au moins un paramètre relatif à une différence de longueur de trajet de faisceau d'énergie.

4. Dispositif selon l'une des revendications précédentes, dans lequel l'unité de commande (22) est conçue pour régler un rapport défini des entrées d'énergie et/ou un rapport défini des tailles de spot, en particulier par longueur de trajet de faisceau d'énergie, de faisceaux d'énergie (11 - 15) émis par au moins deux éléments d'irradiation (4 - 8), en particulier pour régler les entrées d'énergie d'au moins deux faisceaux d'énergie (11 - 15) émis par au moins deux éléments d'irradiation (4 - 8).

5. Dispositif selon la revendication 2 ou 3, dans lequel le au moins un paramètre est ou comprends
- une vitesse de mouvement de l'au moins un faisceau d'énergie (11 - 15) le long de 1 le trajet du faisceau d'énergie correspondant (17-21) et/ou
- une différence de vitesse de déplacement d'au moins deux faisceaux d'énergie (11 - 15) du même champ d'irradiation (9) le long du trajet correspondant des faisceaux d'énergie (17 - 21) et/ou
- une longueur du trajet du faisceau d'énergie (17 - 21) d'au moins un élément d'irradiation (4 - 8) et/ou
- une différence de longueur d'au moins deux trajets de faisceau d'énergie de différents éléments d'irradiation (4 - 8) du même champ d'irradiation (9) et/ou
- une courbure d'au moins une partie de l'au moins un trajet de faisceau d'énergie (17 - 21) et/ou
- un rayon d'au moins une partie de l'au moins un trajet de faisceau d'énergie (17 - 21) et/ou
- un temps d'écriture du au moins un faisceau d'énergie (11 - 15) et/ou
- une différence de temps d'écriture d'au moins deux faisceaux d'énergie (11 - 15)

6. Dispositif selon l'une des revendications précédentes, dans lequel l'unité de commande (22) est conçue pour commander l'apport d'énergie par un ajustement d'au moins un paramètre d'irradiation d'au moins un élément d'irradiation (4 - 8) du champ d'irradiation (9).

7. Dispositif selon la revendication 6, dans lequel l'unité de commande (22) est conçue approprié pour régler l'au moins un paramètre d'irradiation en fonction d'au moins un paramètre de mouvement du champ d'irradiation (9), en particulier un mouvement de pivotement.

8. Dispositif selon la revendication 6 ou 7, dans lequel l'unité de commande (22) est conçu pour régler l'au moins un paramètre d'irradiation individuellement pour au moins deux éléments d'irradiation (4 - 8) du champ d'irradiation (9), en particulier individuellement pour chaque élément d'irradiation (4 - 8) du champ d'irradiation (9).

9. Dispositif selon l'une quelconque des revendications 6 à 8, dans lequel le au moins un paramètre d'irradiation est ou comprend
une énergie d'au moins un faisceau d'énergie (11 - 15) et/ou
une géométrie de spot du au moins un faisceau d'énergie (11 - 15) et/ou un temps d'écriture.

10. Dispositif selon l'une des revendications précédentes, dans lequel le champ d'irradiation (9) est mobile en translation par rapport au plan de construction (16).

11. Dispositif selon l'une des revendications précédentes, dans lequel le dispositif d'irradiation (3) est conçu pour commander un mouvement de pivotement du champ d'irradiation (9) en fonction d'au moins un trajet de faisceau d'énergie (17 - 21), le champ d'irradiation (9) pouvant pivoter autour d'un axe de pivotement, en particulier un axe de pivotement (25) qui est essentiellement perpendiculaire à un plan de construction (16) du dispositif (1, 32).

12. Dispositif selon la revendication 11, dans lequel le champ d'irradiation (9) par rapport à une direction de déplacement le long du trajet du faisceau d'énergie (17-21).

13. Procédé d'exploitation d'au moins un appareil (1, 32) pour la fabrication additive d'objets tridimensionnels par irradiation et solidification sélectives successives, couche par couche, de couches d'un matériau de construction solidifiable au moyen d'une source d'énergie, en particulier un appareil (1, 32) selon l'une des revendications 1 à 12, dans lequel l'appareil (1, 32) comprend un dispositif d'irradiation (3) avec un réseau d'irradiation (9) avec au moins deux éléments d'irradiation (4 - 8) disposés en tant que réseau d'irradiation (9), en particulier sur au moins un support d'éléments d'irradiation commun (10), dans lequel chaque élément d'irradiation (4 - 8) est configuré pour émettre un faisceau d'énergie (11 - 15) qui peut être dirigé ou guidé le long d'un faisceau d'énergie (11 - 15) en particulier au moins partiellement courbé, en particulier un trajet de faisceau d'énergie (17 - 21) au moins partiellement courbé dans le plan de construction (16), dans lequel le réseau d'irradiation (9) est mobile par rapport au plan de construction (16), dans lequel un apport d'énergie dans au moins un trajet de faisceau d'énergie (17 - 21) et/ou la taille de spot d'au moins un faisceau d'énergie (11 - 15) émis par au moins un élément d'irradiation (4 - 8) est commandé en fonction d'au moins un paramètre concernant une section au moins partiellement courbée d'au moins un faisceau d'énergie (11 - 15). partie incurvée d'au moins un faisceau d'énergie (17 - 21), l'appareil comprenant en outre
un dispositif de support portant un matériau d'accumulation qui est positionné dans un plan d'accumulation
(16) de l'appareil (1, 32), le dispositif de support déplaçant de manière pivotante le plan d'accumulation (16) par rapport à au moins un élément d'irradiation (4-8) du champ d'irradiation.
